# EUROPÄISCHE PATENTSCHRIFT

(11) **EP 3 421 112 B1**
(45) Veröffentlichungstag und Bekanntmachung des Hinweises auf die Patenterteilung: **09.12.2020**
(21) Anmeldenummer: 18177195.7
(22) Anmeldetag: 12.06.2018
(51) Int. Cl.: B01D 46/00, B01D 46/10, B01D 46/52

(54) **FLACHFILTERELEMENT, INSBESONDERE ZUR GASFILTRATION**
FLAT FILTER ELEMENT, IN PARTICULAR FOR FILTERING GAS
ÉLÉMENT FILTRANT PLAT, EN PARTICULIER DESTINÉ À LA FILTRATION DE GAZ

(30) Priorität: 28.06.2017 DE 102017006074
(43) Veröffentlichungstag der Anmeldung: 02.01.2019
(73) Patentinhaber: Mann+Hummel GmbH, 71636 Ludwigsburg (DE)
(72) Erfinder: SCHMID, Daniel, 74343 Sachsenheim (DE); EPLI, Sven, 74078 Heilbronn (DE)
(74) Vertreter: Seyboth, Matthias

(56) Entgegenhaltungen:
- WO-A1-2018/158387
- DE-A1-102012 019 320
- DE-A1-102013 207 250
- JP-A- 2012 097 643
- US-A1- 2016 051 909

## Beschreibung

### Technisches Gebiet

Die Erfindung bezieht sich auf ein Flachfilterelement, insbesondere zur Gasfiltration, beispielsweise für einen Luftfilter, nach dem Oberbegriff des Ansrpuches 1.

### Stand der Technik

In der US 2007/0144154 A1 wird ein Flachfilterelement für einen Luftfilter zur Filtration der Verbrennungsluft einer Brennkraftmaschine in einem Fahrzeug beschrieben. Das Flachfilterelement weist einen quaderförmigen Filtermediumkörper auf, der als Faltenfilter ausgebildet ist, wobei die Anströmseite und die Abströmseite auf gegenüberliegenden Seiten liegen. Benachbart zur Abströmseite ist an dem Filtermediumkörper ein umlaufendes Dichtungselement zur Separierung der Rohluft von der Reinluft angeordnet. An der Abströmseite befindet sich im Filtermediumkörper ein U-förmiges Stützelement, das über die Abströmseite hinausragt und an dem im montierten Zustand eine Stützwand an der Innenseite eines Gehäusedeckels des aufnehmenden Filtergehäuses anliegt. Das U-förmige Stützelement im Filtermediumkörper und die zugehörige Gehäusewand im Deckel separieren den Luftstrom an der Reinseite und ermöglichen die Abzweigung eines Teilluftstroms zu einem Katalysator.

Aus der DE 4115986 A1, welche darauf gerichtet ist, eine Befestigungsvorrichtung für einen Filtereinsatz zu schaffen, wobei unabhängig vom Feingefühl des Monteurs auch bei Erschütterungen der Brennkraftmaschine eine dichte und dauerhafte reibschlüssige Verbindung zwischen Filtereinsatz und Filtergehäuse gewährleistet ist, ist ein Filtereinsatz bekannt, welcher in einem Filtergehäuse durch eine Klemmverbindung reibschlüssig gehalten ist, wobei zwischen dem Filtereinsatz und dem Filtergehäuse zwei längliche Spannelemente zueinander parallel liegend abgestützt sind, die schwenkbar im Filtergehäuse gelagert sind und zum Verspannen des Filtereinsatzes eine Strecklage durchlaufen und in Spannstellung durchgeknickt seitlich am Filtergehäuse anliegen, wobei jedes der beiden Spannelemente aus zwei gelenkig miteinander verbundenen Hebeln besteht, die an ihren anderen Enden gelenkig mit einem am Filtereinsatz anliegenden Spannrahmen sowie mit dem Filtergehäuse verbunden sind.

Aus der DE 41 31 716 A1, welche darauf gerichtet ist, ein Ansaugluftfilter zu schaffen, das besonders raumsparend in dem Motorraum eines Kraftfahrzeuges einbaubar ist, ist ein Ansaugluftfilter bekannt mit einem in ein in einer Ebene in ein erstes und zweites Teil teilbares Gehäuse einsetzbaren austauschbaren plattenförmigen Filtereinsatz mit einer umlaufenden den Rein- und Rohraum des Gehäuses gegeneinander dichtenden Dichtung, wobei die umlaufende, die beiden Gehäuseteile gegeneinander dichtende Dichtung integrierter Bestandteil des Filtereinsatzes ist. An dem Übergang des Filtermaterials zu dem von diesem freibleibenden offenen Verbindungsbereich der beiden Gehäuseteile an dem Filtermaterial ist eine dicht mit der umlaufenden Dichtung verbundene Zusatz-Dichtung vorgesehen, die bei geschlossenem Gehäuse dicht an einer in dem ersten Gehäuseteil Roh- und Reinluft trennenden Wand liegt. Außerhalb des Bereiches der Zusatz-Dichtung dichtet die umlaufende Dichtung das Filtermaterial gegenüber dem Rein- und Rohraum des Filtergehäuses, wobei ein sich außerhalb des Filtermaterials an die Zusatz-Dichtung anschließender Bereich der umlaufenden Dichtung versteift ist. Die Versteifung bewirkt ein den Freiraum zwischen umlaufender Dichtung und Zusatz-Dichtung ausfüllendes Gitter, wobei die Zusatz-Dichtung über eine in das zweite Gehäuseteil eingebrachte Stützeinrichtung an die Roh- und Reinseite in dem ersten Gehäuseteil trennende Wand andrückbar ist und wobei die umlaufende Dichtung durch einen Rahmen versteift ist.

Die US 2016/00 51 909 A1 ist darauf gerichtet, ein Filterelement gegen Auslenkungskräfte im Betrieb zu verstärken, um eine Beschädigung des Filters zu vermeiden und einen zuverlässigen Betrieb des Luftansaugsystems besser zu gewährleisten und offenbart hierzu eine Filtereinrichtung mit einem Flachfilterelement, wobei auf der Abströmseite des Filterelements ein Gitter mit mehreren Stützpfosten-Aufnahmeelementen angeordnet sind, welche mit Stützelementen des Gehäuseoberteils derart zusammenwirken, dass ein am Seitenrand des Filterelements umlaufend angeordnetes Dichtelement gegen das Gehäuseunterteil gedrückt wird und wobei das Gitter auch mit der Dichtung verbunden ist.

Die WO2008 / 147 585 A2 ist darauf gerichtet, u.a. insbesondere die Menge an mitgerissenen Ölen (Flüssigkeiten) und feinen Verunreinigungen (Partikel) in Kurbelgehäusegasen zu reduzieren und insbesondere auf die Entwicklung von Techniken zur Verwendung bei der Kurbelgehäuseentlüftung (CCV), Filtersysteme, die einen Plattenfilter als einen Serviceteil verwenden gerichtet ist, wobei Filteranordnungen zur bevorzugten Verwendung zum Filtern von Kurbelgehäuseblasen bereitgestellt werden und die Anordnungen speziell entwickelt sind, um eine Flüssigkeitsdrainage von Koaleszenzmedien bereitzustellen. Die WO2008 / 147 585 A2 offenbart hierzu eine Filtereinrichtung mit einem zweiteiligen Gehäuse und einem Flachfilterelement bekannt, bei der sich ein Rahmenteil an einem Gehäuseteil abstützt und dadurch ein umlaufendes Dichtungselement des Filterelements, welches an dem Rahmen angeordnet ist, gegen das andere Gehäuseteil drückt. Das Dichtungselement weist einen Bogen auf, der über das Filterelement hinausragt.

WO2018/158 387 A1 offenbart ein Filterelement mit einem Rahmen, wobei das Filterelement mindestens zwei unterschiedliche Filtermedien aufweist, welche nebeneinander im Rahmen angeordnet sind.

DE 10 2013 207250 A1 beschreibt ein Filterelement mit einem Filterkörper aus einem Filtermaterial, mit einem Dichtungsrahmen aus einem Dichtungsmaterial, der einen dem Filterkörper zugeordneten Filterabschnitt aufweist, der den Filterkörper randseitig geschlossen umlaufend einfasst. Ein Tragrahmen zum Befestigen eines Funktionsteils ist vorgesehen, der eine Funktionsteilöffnung aufweist und geschlossen umlaufend einfasst, wobei der Dichtungsrahmen einen dem Tragrahmen zugeordneten Funktionsabschnitt aufweist, der den Tragrahmen randseitig geschlossen umlaufend einfasst.

### Offenbarung der Erfindung

Der Erfindung liegt die Aufgabe zugrunde, mit einfachen konstruktiven Maßnahmen ein Flachfilterelement so auszubilden, dass im aufnehmenden Filtergehäuse eine strömungsdichte Separierung der Roh- von der Reinseite gewährleistet ist und zusätzlich im eingesetzten Zustand eine vorbestimmt gewählte Abstützung des Filterelements gewährleistet ist, wobei zusätzlich ein Strömungsweg an einer vorbestimmten Anström- bzw. Abströmseite an der Abstützung vorbei ausgebildet sein kann.

Diese Aufgabe wird erfindungsgemäß mit den Merkmalen des Anspruches 1 gelöst. Die Unteransprüche geben zweckmäßige Weiterbildungen an.

Das erfindungsgemäße Flachfilterelement wird vorzugsweise zur Gasfiltration eingesetzt, insbesondere zur Luftfiltration, beispielsweise zur Filtration der Verbrennungsluft, die einer Brennkraftmaschine in einem Fahrzeug zugeführt wird. Grundsätzlich kommt aber auch eine Anwendung zur Flüssigkeitsfiltration in Betracht.

Das Flachfilterelement weist einen quaderförmigen Filtermediumkörper auf, bzw. weist einen Filtermediumkörper mit einer im Wesentlichen rechteckige Grundfläche auf, dessen gegenüberliegende Seiten die Anström- und die Abströmseite bilden. Die Anström- bzw. Rohseite sowie die Abström- bzw. Reinseite sind jeweils in sich eben ausgebildet. Vorteilhafterweise liegen Anström- und Abströmseite parallel zueinander, wenngleich auch Ausführungen mit einer nicht-parallelen Ausrichtung von Anström- und Abströmseite möglich sind, vorzugsweise unter einem Winkel von maximal 30°.

An der Anström- oder Abströmseite erheben sich mehrere Stützkörper über die betreffende Seite, die am Filtermediumkörper angeordnet sind. Die Stützkörper dienen zur Abstützung an einem Gehäusebauteil im eingesetzten Zustand des Flachfilterelements in ein aufnehmendes Filtergehäuse. Die Stützkörper beaufschlagen ein Dichtungselement, das ebenfalls am Filtermediumkörper angeordnet ist und sich auf der der Kontaktseite der Stützkörper zum abstützenden Gehäusebauteil abgewandten Seite an den Stützkörpern befindet. Jeder Stützkörper überträgt somit eine Stützkraft vom Gehäusebauteil auf das Dichtungselement, das im eingebauten Zustand des Flachfilterelementes an einem weiteren Gehäuseteil anliegt und insbesondere die Roh- von der Reinseite im Filtergehäuse separiert.

Bei dem abstützenden Gehäusebauteil handelt es sich beispielsweise um einen Gehäusedeckel, der auf ein Filtergrundgehäuse aufgesetzt und mit diesem lösbar verbunden wird. Mit dem Aufsetzen des Gehäusedeckels gelangt dieser in Kontakt mit der Kontaktseite der Stützkörper und drückt die Stützkörper gegen das Filtergrundgehäuse, so dass entsprechend auch das Dichtungselement gegen ein Gehäusebauteil des Filtergrundgehäuses beaufschlagt wird. Hierdurch ist sichergestellt, dass das Dichtungselement die Roh- von der Reinseite strömungsdicht separiert. Die Dichtkraft wird im Wesentlichen von dem Gehäusebauteil aufgebracht, das die Stützkörper beaufschlagt.

Da die Stützkörper über die Anström- bzw. Abströmseite des Filtermediumkörpers überstehen, ist gewährleistet, dass die Kraft von dem Gehäusebauteil, insbesondere dem Gehäusedeckel, auf die Stützkörper geleitet wird und der Filtermediumkörper von den Haltekräften des Gehäusebauteils entlastet bleibt. Außerdem ist ein Strömungsweg an der betreffenden Anström- bzw. Abströmseite an den Stützkörpern vorbei gegeben, so dass sich das Fluid ohne Einschränkung oder zumindest im Wesentlichen ohne Einschränkung an dieser Seite des Filtermediumkörpers an den Stützkörpern vorbei ausbreiten kann.

Gemäß einer vorteilhaften Ausführung befinden sich die Stützkörper an der Abströmseite des Filtermediumkörpers. Das gereinigte Fluid strömt über die Abströmseite des Filtermediumkörpers ab, wobei vorteilhafterweise ebenfalls an der Abströmseite eine umlaufende Dichtung angeordnet ist, welche die Roh- von der Reinseite im Filtergehäuse separiert. In einer alternativen Ausführung befinden sich die Stützkörper an der Anströmseite des Filtermediumkörpers.

Erfindungsgemäß sind mehrere Stützkörper am Filtermediumkörper angeordnet, zwischen denen ein Strömungsweg für das Fluid liegt. Jeder Stützkörper wird auf seiner außenliegenden Kontaktseite von dem abstützenden Gehäusebauteil beaufschlagt und drückt seinerseits gegen ein Dichtungselement, so dass dieses Dichtungselement im verbauten Zustand des Flachfilterelementes gegen ein weiteres Gehäuseteil gedrückt wird. Vorteilhafterweise beaufschlagen alle Stützkörper ein gleiches, gemeinsames Dichtungselement. Es sind aber auch Ausführungen möglich, bei denen jeder Stützkörper ein separates Dichtungselement beaufschlagt.

Erfindungsgemäß hüllt das Dichtungselement die Stützkörper auf deren Kontaktseite ein. Diese Ausführung hat den Vorteil, dass im verbauten Zustand das abstützende Gehäusebauteil die Stützkörper über das zwischenliegende Dichtungsmaterial beaufschlagt, wodurch sich eine dämpfende Wirkung ergibt und insbesondere unerwünschte Geräuschentwicklungen, beispielsweise durch Vibrationen zwischen dem abstützenden Gehäusebauteil und den Stützkörpern, vermieden werden. Der Abschnitt des Dichtungsmaterials an der Kontaktseite der Stützkörper ist einteilig mit dem Dichtungselement ausgebildet, das auf der der Kontaktseite abgewandten Seite von den Stützkörpern gegen das weitere Gehäusebauteil gedrückt wird.

In einer nicht erfindungsgemäßen alternativen Ausführung befindet sich an der Kontaktseite der Stützkörper ein schwingungsdämpfendes Element, beispielsweise aus einem Elastomer, das separat von dem Dichtungselement oder einteilig mit dem Dichtungselement ausgebildet ist, welches von den Stützkörpern beaufschlagt wird. Hierdurch werden zusätzlich konstruktiv einfach Geräuschentwicklungen zwischen Filterelement und Filtergehäuse in der Einsatzsituation verringert oder sogar vermieden, welche durch direkten Kunststoffkontakt entstehen.

Das Dichtungselement, welches von den Stützkörpern gegen das Gehäuseteil gepresst wird, liegt erfindungsgemäß benachbart zu einer Seitenwand des Filtermediumkörpers zwischen Anström- und Abströmseite. In dieser Position befindet sich das Dichtungselement seitlich am Filtermediumkörper und ermöglicht es, innerhalb des Filtergehäuses einen Einströmraum zur Aufnahme des ungereinigten Rohfluids von einem Abströmraum zur Aufnahme des filtrierten Reinfluids strömungsdicht zu separieren, wobei Einström- und Abströmraum vorteilhafterweise zumindest annähernd auf gleicher Höhe liegen.

Erfindungsgemäß sind die Stützkörper an einer Trägerleiste angeordnet, die mit dem Filtermediumkörper verbunden ist. Am Filtermediumkörper ist ein umlaufender Trägerrahmen angeordnet, der Träger einer Dichtung ist, welche von dem Dichtungselement separat ausgebildet ist, die von den Stützkörpern beaufschlagt wird. Die Dichtung am Trägerrahmen ist insbesondere an der Rein- bzw. Abströmseite des Filtermediumkörpers angeordnet zur Separierung der Abströmseite von der Anströmseite. Die Trägerleiste, welche vorteilhafterweise Träger des Dichtungselementes ist, das von den Stützkörpern beaufschlagt wird, ist erfindungsgemäß mit dem Trägerrahmen verbunden und kann gegebenenfalls einteilig mit dem Trägerrahmen ausgebildet sein.

Der Trägerrahmen erstreckt sich, gemäß einer weiteren vorteilhaften Ausführung, an einer Seite über die Kontur des Filtermediumkörpers hinaus. Der Trägerrahmen ist somit größer als die Kontur des Filtermediumkörpers, wobei der überstehende Abschnitt des Trägerrahmens vorzugsweise U- oder C-förmig ausgebildet ist und ebenfalls Träger der umlaufenden Dichtung ist. Der überstehende Abschnitt des Trägerrahmens befindet sich im eingebauten Zustand vorteilhafterweise an der Innenwand eines Abströmraums im Filtergehäuse, der das gereinigte Fluid aufnimmt, welches von der Abströmseite des Filtermediumkörpers abströmt. In die Wandung des Abströmraums ist eine Abströmöffnung eingebracht, über die das gereinigte Fluid aus dem Filtergehäuse abströmen kann.

Das Dichtungselement, das von den Stützkörpern beaufschlagt wird, liegt insbesondere im montierten Zustand des Flachfilterelementes an einem Gehäusesteg an, der im Filtergehäuse zwischen dem Einströmraum, in welchem das ungereinigte Rohfluid eingeführt wird, und dem Abströmraum zur Aufnahme des gereinigten Fluids liegt. Das Dichtungselement stützt sich, beaufschlagt von der Schließkraft des abstützenden Gehäusebauteils, welche von den Stützkörpern übertragen wird, an dem Gehäusesteg ab und sorgt für die strömungsdichte Separierung zwischen Einströmraum und Abströmraum.

Die Erfindung bezieht sich des Weiteren auf eine Filtereinrichtung mit einem Filtergehäuse zur Aufnahme des vorbeschriebenen Flachfilterelementes, wobei ein Gehäusebauteil, insbesondere der Gehäusedeckel, im montierten Zustand gegen die Stützkörper des Flachfilterelementes drückt und das Dichtungselement von den Stützkörpern gegen ein weiteres Gehäuseteil, insbesondere den Gehäusesteg zwischen Einströmraum und Abströmraum, gepresst wird.

Gegebenenfalls befinden sich die Einströmöffnung zum Einleiten des ungereinigten Rohfluids und die Abströmöffnung zum Ableiten des gereinigten Reinfluids zumindest annähernd auf gleicher Höhe im Filtergehäuse, jedoch an unterschiedlichen Seiten des Filtergehäuses. Die gleiche Höhe bezieht sich hierbei auf eine Ebene, welche parallel zur Anström- und/oder Abströmseite des Filtermediumkörpers verläuft und sowohl die Einströmöffnung als auch die Abströmöffnung schneidet. Diese Anordnung ermöglicht eine flach bauende Filtereinrichtung.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: eine Seitenansicht einer Filtereinrichtung zur Luftfiltration mit einem Filtergehäuse und einem eingesetzten Flachfilterelement,
- Fig. 2: die Filtereinrichtung in Draufsicht,
- Fig. 3: eine perspektivische Ansicht des Flachfilterelements, mit insgesamt drei Stützkörpern, die sich benachbart zu einer Seite des Filtermediumkörpers des Flachfilterelementes erstrecken,
- Fig. 4: das Flachfilterelement gemäß Fig. 3 im Schnitt,
- Fig. 5: ein Detail aus dem Flachfilterelement mit einem Stützkörper in vergrößerter Darstellung,
- Fig. 6 bis 8,: den Fig. 3 bis 5 entsprechende Darstellungen eines Flachfilterelementes in einer nicht erfindungsgemäßen Ausführung mit einer alternativen Gestaltung der Stützkörper,
- Fig. 9 bis 11: ein weiteres nicht erfindungsgemäßes Ausführungsbeispiel eines Flachfilterelementes mit Stützkörpern,
- Fig. 12 bis 14: ein weiteres nicht erfindungsgemäßes Ausführungsbeispiel eines Flachfilterelementes mit Stützkörpern,
- Fig. 15 bis 17: ein weiteres nicht erfindungsgemäßes Ausführungsbeispiel eines Flachfilterelementes mit Stützkörpern.

In den Figuren sind gleiche Bauteile mit gleichen Bezugszeichen versehen.

### Ausführungsform(en) der Erfindung

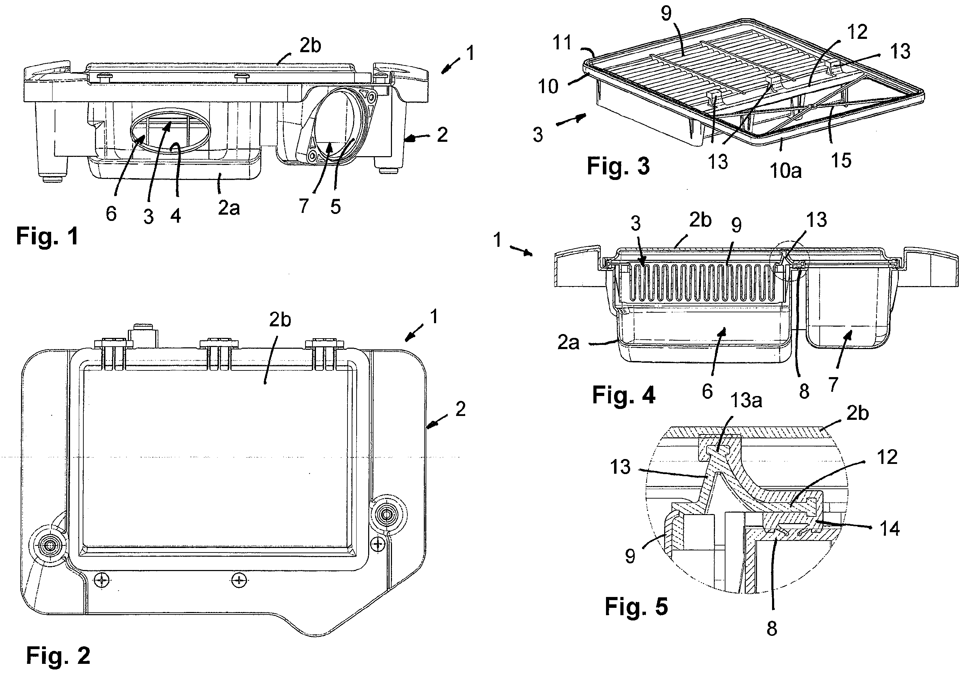

In den Fig. 1 bis 5 ist ein erstes Ausführungsbeispiel einer Filtereinrichtung 1 mit einem Flachfilterelement 3 zur Luftfiltration, beispielsweise im Ansaugtrakt einer Brennkraftmaschine in einem Fahrzeug dargestellt. Die Filtereinrichtung 1 weist ein Filtergehäuse 2 mit einem Filtergrundgehäuse 2a und einem lösbar aufgesetzten, mit dem Filtergrundgehäuse 2a verbindbaren Gehäusedeckel 2b auf. In das Filtergehäuse 2 ist ein Flachfilterelement 3 eingesetzt, dem das zu reinigende Fluid über eine Einströmöffnung 4 im Filtergrundgehäuse 2a zuführbar ist. Auf der Reinseite wird das gereinigte Fluid über eine Abströmöffnung 5, die ebenfalls in das Filtergrundgehäuse 2a eingebracht ist, aus der Filtereinrichtung 1 abgeleitet.

Wie Fig. 1 in Verbindung mit Fig. 4 zu entnehmen, liegen im Filtergrundgehäuse 2a nebeneinander angeordnet ein Einströmraum 6, in dessen Wandung die Einströmöffnung 4 eingebracht ist, sowie ein Abströmraum 7, in dessen Wandung die Abströmöffnung 5 eingebracht ist. Der Einströmraum 6 und der Abströmraum 7 sind über eine Gehäusewand mit einem Gehäusesteg 8 separiert. Das ungereinigte Fluid wird über die Einströmöffnung 4 in den Einströmraum 6 im Filtergrundgehäuse 2 geleitet, an den die Anströmseite des eingesetzten Flachfilterelementes 3 angrenzt. An der gegenüberliegenden Abströmseite des Flachfilterelementes 3 kann das gereinigte Fluid seitlich abströmen und wird in den danebenliegenden Abströmraum 7 geleitet, aus dem das gereinigte Fluid über die Abströmöffnung 5 abgeführt wird. Der Einströmraum 6 und der Abströmraum 7 bilden strömungsdicht separierte Räume im Filtergrundgehäuse 2a.

Die Einströmöffnung 4 und die Abströmöffnung 5 sind in der Weise positioniert, dass eine Ebene, die parallel zur Anström- bzw. Abströmseite des Flachfilterelementes 3 verläuft, sowohl die Einströmöffnung 4 als auch die Abströmöffnung 5 schneidet. Die Mittelpunkte von Einström- und Abströmöffnung 4 bzw. 5 liegen insbesondere annähernd in einer gleichen Ebene, welche parallel zur Anström- bzw. Abströmseite des Flachfilterelementes 3 verläuft.

Das Flachfilterelement 3 umfasst einen Filtermediumkörper 9, der mit einer im Wesentlichen rechteckigen Grundfläche, insbesondere quaderförmig, ausgebildet und als Faltenfilter mit einer Vielzahl parallel liegender Filterfalten ausgeführt ist. Die Anström- bzw. Rohseite, welche in der Darstellung gemäß den Fig. 3 und 5 unten liegt, und die Abström- bzw. Reinseite, welche oben liegt, verlaufen parallel zueinander. Zwischen der Abströmseite und dem benachbart angeordneten Gehäusedeckel 2b liegt ein Strömungsraum, in dem das gereinigte Fluid seitlich in Richtung des Abströmraums 7 abströmen kann.

Am insbesondere quaderförmigen Filtermediumkörper 9 ist an der Abströmseite ein Trägerrahmen 10 angeordnet, der Träger einer Dichtung 11 ist. Im eingebauten Zustand liegt der Gehäusedeckel 2b auf Kontakt zur Dichtung 11 und separiert die Anström- von der Abströmseite des Filtermediumkörpers 9. Der Trägerrahmen 10 liegt an drei Seiten des Filtermediumkörpers 9 an, an der vierten Seite erstreckt sich der Trägerrahmen 10 mit einem Abschnitt 10a über den Filtermediumkörper hinaus; der Abschnitt 10a ist U- oder C-förmig ausgebildet. Der Abschnitt 10a entspricht der Innenkontur des Abströmraums 7, wohingegen die übrigen Abschnitte des Trägerrahmens 10, die unmittelbar am Filtermediumkörper 9 anliegen, der Innenkontur des Einströmraums 6 entsprechen.

Benachbart zu der Seitenfläche des Filtermediumkörpers 9, über die der Abschnitt 10a des Trägerrahmens hinausragt, liegt eine Trägerleiste 12, die mit dem Trägerrahmen 10 verbunden, insbesondere einteilig mit dem Trägerrahmen 10 ausgebildet ist. An der Oberseite der Trägerleiste 12 sind insgesamt drei Stützkörper 13 angeordnet, welche mit der Trägerleiste 12 verbunden sind, insbesondere einteilig mit der Trägerleiste 12 ausgebildet sind und sich über die Abströmseite des Filtermediumkörpers 9 erheben. An der Unterseite der Trägerleiste 12 befindet sich ein Dichtungselement 14, das sich über die Länge der Trägerleiste 12 erstreckt und sich an dem Gehäusesteg 8 des Gehäusegrundkörpers 2a im Übergang zwischen dem Einströmraum 6 und dem Abströmraum 7 abstützt. Die obenliegende Kontaktseite 13a des Stützkörpers 13 wird von der Innenseite des Gehäusedeckels 2b beaufschlagt, wobei aufgrund der Verbindung, insbesondere aufgrund der Einteiligkeit, von Stützkörper 13 und Trägerleiste 12 die Stützkraft zwischen Gehäusedeckel 2b und Stützkörper 13 auch auf das Dichtungselement 14 übertragen wird, das mit einer entsprechenden Stützkraft gegen den Gehäusesteg 8 gedrückt wird. Hierdurch ist konstruktiv einfach sichergestellt, dass das Dichtungselement 14 im Bereich des Gehäusestegs 8 den Abströmraum 7 strömungsdicht vom Einströmraum 6 separiert. Zusätzlich ist konstruktiv einfach ein Strömungsweg an der Abströmseite des Filtermediumkörpers 9 am Stützkörper 13 vorbei gegeben, so dass sich das Fluid ohne Einschränkung oder zumindest im Wesentlichen ohne Einschränkung an dieser Seite des Filtermediumkörpers 9 am Stützkörper 13 vorbei ausbreiten kann.

Der Stützkörper 13 ist teilweise von dem Material des Dichtungselementes 14 eingehüllt. Auch die obenliegende Kontaktseite 13a des Stützkörpers 13 ist von dem Dichtungsmaterial des Dichtungselementes 14 umhüllt und bildet einen Dämpfungsblock zur Dämpfung von Schwingungen und Vibrationen zwischen dem Gehäusedeckel 2b und dem Stützkörper 13.

Wie Fig. 3 zu entnehmen, ist der Abschnitt 10a des Trägerrahmens 10, der über die Seitenfläche des Filtermediumkörpers 9 hinausragt, von einem Stützkreuz 15 stabilisiert, das zumindest annähernd in der Ebene der Abströmseite des Filtermediumkörpers 9 liegt und insbesondere einteilig mit dem Trägerrahmen 10 ausgebildet ist.

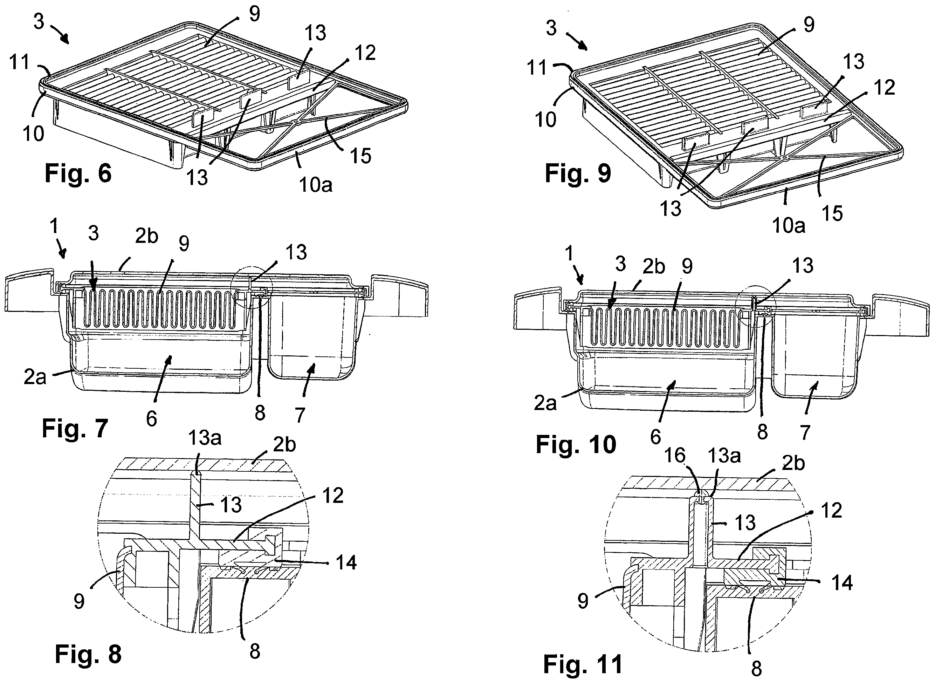

Im erfindungsgemäßen Ausführungsbeispiel gemäß den Fig. 3 bis 5 weist der Stützkörper 13 eine V-förmige Querschnittsform auf. Im nicht erfindungsgemäßen Ausführungsbeispiel gemäß den Fig. 6 bis 8 ist dagegen der Stützkörper 13, der einteilig mit der Trägerleiste 12 ausgebildet ist, als rechteckförmiges Stützblatt ausgebildet, das sich senkrecht zur Ebene der Trägerleiste 12 erstreckt und dessen obenliegende Kontaktseite 13a auf Kontakt zur Innenseite des Gehäusedeckels 2b liegt. Das Dichtungselement 14 umgreift die Trägerleiste 12 und liegt mit seinem Hauptkörper auf dem Gehäusesteg 8 auf. Der Stützkörper 13 ist nicht von dem Dichtungsmaterial des Dichtungselementes 14 und auch nicht von einem sonstigen Dämpfungsmaterial bedeckt.

Im nicht erfindungsgemäßen Ausführungsbeispiel gemäß den Fig. 9 bis 11 ist das Dichtungselement 14 in gleicher Weise wie beim Ausführungsbeispiel gemäß den Fig. 6 bis 8 ausgebildet und umgreift die Trägerleiste 12, wobei der Hauptblock des Dichtungselementes 14 an der Unterseite der Trägerleiste 12 liegt und sich am Gehäusesteg 8 abstützt. Der Stützkörper 13 ist beispielhaft als ein Hohlkörper mit einer im Wesentlichen rechteckigen Grundfläche, insbesondere als quaderförmiger Hohlkörper ausgebildet und weist im Bereich seiner oben liegenden Kontaktseite 13 eine Öffnung auf, in die ein Dämpfungselement 16 eingesetzt ist, welches sich über die Kontaktseite 13 nach oben erhebt und sich an der Innenseite des Gehäusedeckels 2b abstützt. Das Dämpfungselement 16 ist separat von dem Dichtungselement 14 ausgebildet und kann gegebenenfalls aus dem gleichen Material wie das Dichtungselement 14 bestehen. Das Dämpfungselement 16 dämpft Schwingungen und Vibrationen zwischen dem Gehäusedeckel 2b und dem Stützkörper 13.

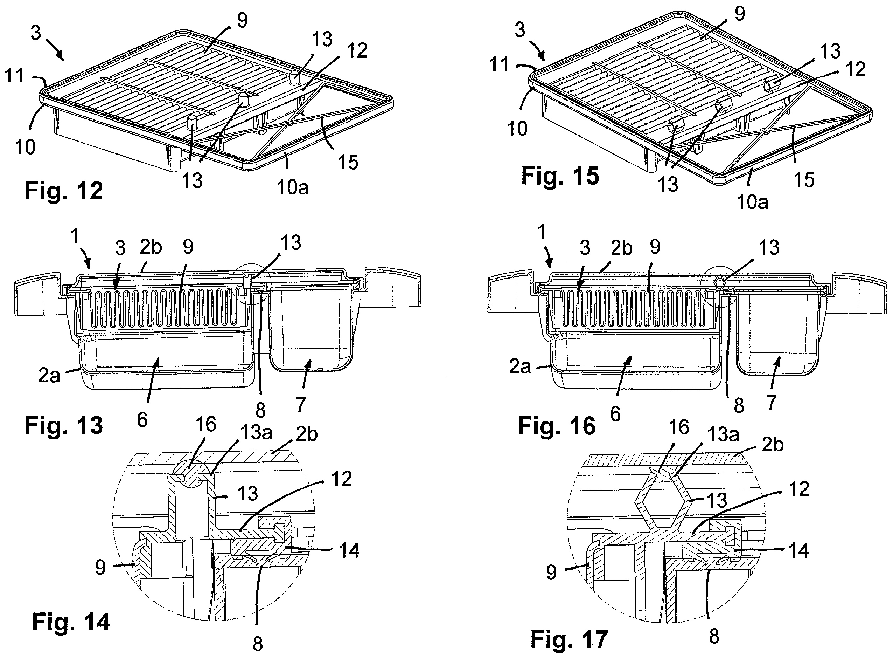

Im nicht erfindungsgemäßen Ausführungsbeispiel gemäß den Fig. 12 bis 14 sind die Stützkörper 13 als hohle Poller ausgebildet, die im Bereich ihrer obenliegenden Kontaktseite 13a eine Öffnung zur Aufnahme eines Dämpfungselementes 16 aufweisen, welches unmittelbar auf Kontakt zur Innenseite des Gehäusedeckels 2b liegt. Das Dichtungselement 14 und das Dämpfungselement 16 sind separat ausgebildet.

Im nicht erfindungsgemäßen Ausführungsbeispiel gemäß den Fig. 15 bis 17 sind die Stützkörper 13 als Hohlkörper mit einem polygonalen Querschnitt ausgebildet und weisen ebenfalls an ihrer obenliegenden Kontaktseite 13a eine Öffnung zur Aufnahme eines Dämpfungselementes 16 auf, das separat von dem Dichtungselement 14 ausgebildet ist. Die obenliegende Öffnung ist schlitzförmig ausgeführt, zugleich erstrecken sich die Dämpfungselemente 16 über die gesamte Länge der Stützkörper 13 und bilden eine größere Abstützfläche zwischen den Dämpfungselementen 16 und dem Gehäusedeckel 2b.

## Patentansprüche

1. Flachfilterelement, insbesondere zur Gasfiltration, beispielsweise für einen Luftfilter, mit einem quaderförmigen Filtermediumkörper (9) mit einer Anström- und einer Abströmseite auf gegenüberliegenden Seiten des Filtermediumkörpers (9) und mit mehreren am Filtermediumkörper (9) angeordneten, sich über die Anström- oder Abströmseite erhebenden Stützkörpern (13) zur Abstützung an einem Gehäusebauteil, **dadurch gekennzeichnet, dass** die Stützkörper (13) auf der ihrer Kontaktseite (13a) zum abstützenden Gehäusebauteil abgewandten Seite ein Dichtungselement (14) beaufschlagen, das am Filtermediumkörper (9) angeordnet ist, wobei die Stützkörper (13) an einer Trägerleiste (12) angeordnet sind, wobei am Filtermediumkörper (9) ein Trägerrahmen (10) befestigt ist, der Träger einer Dichtung (11) ist, wobei die Trägerleiste (12) sich benachbart zu einer Seitenwand des Filtermediumkörpers (9) erstreckt und Träger des Dichtungselements (14) ist und wobei die Trägerleiste (12) mit dem Trägerrahmen (10) verbunden ist, wobei die Stützkörper (13) auf der Anström- oder Abströmseite des Filtermediumkörpers (9) angeordnet sind, wobei zwischen den Stützkörpern ein Strömungsweg liegt, und wobei das Dichtungselement (14) die Stützkörper (13) auf deren Kontaktseite einhüllt.

2. Flachfilterelement nach Anspruch 1, **dadurch gekennzeichnet, dass** die Stützkörper (13) an der Abströmseite des Filtermediumkörpers (9) angeordnet sind.

3. Flachfilterelement nach einem der Ansprüche 1 oder 2, **dadurch gekennzeichnet, dass** das Dichtungselement (14) benachbart zu einer Seitenwand des Filtermediumkörpers (9) zwischen Anström- und Abströmseite angeordnet ist.

4. Flachfilterelement nach Anspruch 1, **dadurch gekennzeichnet, dass** der Trägerrahmen (10) sich an einer Seite über die Kontur des Filtermediumkörpers (9) hinaus erstreckt.

5. Flachfilterelement nach einem der Ansprüche 1 bis 4, **dadurch gekennzeichnet, dass** an der Kontaktseite der Stützkörper (13) ein schwingungsdämpfendes Element (16) angeordnet ist, insbesondere ein aus einem Elastomer ausgebildetes schwingungsdämpfendes Element (16), das separat von dem Dichtungselement (14) oder einteilig mit dem Dichtungselement (14) ausgebildet ist, welches von dem Stützkörper (13) beaufschlagt wird.

6. Flachfilterelement nach einem der Ansprüche 1 bis 5, **dadurch gekennzeichnet, dass** der Filtermediumkörper (9) als Faltenfilter mit Filterfalten ausgebildet ist.

7. Filtereinrichtung mit einem Flachfilterelement (3) nach einem der Ansprüche 1 bis 6 und mit einem Filtergehäuse (2) zur Aufnahme des Flachfilterelements (3).

8. Filtereinrichtung nach Anspruch 7, **dadurch gekennzeichnet, dass** in das Filtergehäuse (2) eine Einströmöffnung (4) und eine Abströmöffnung (5) eingebracht sind, die zumindest annähernd auf gleicher Höhe, jedoch an unterschiedlichen Seiten des Filtergehäuses (2), angeordnet sind.

9. Filtereinrichtung nach Anspruch 7 oder 8, **dadurch gekennzeichnet, dass** in das Filtergehäuse (2) ein Einströmraum (6) und ein Abströmraum (7) eingebracht sind, zwischen denen ein Gehäusesteg (8) liegt, an dem sich das Dichtungselement (14) des eingesetzten Filterelements abstützt.

## Claims

1. Flat filter element, in particular for gas filtration, for example for an air filter, having a cuboid-shaped filter medium body (9) with an inflow side and an outflow side on opposite sides of the filter medium body (9) and having a plurality of support bodies (13) disposed on the filter medium body (9), which support bodies project beyond the inflow or outflow side for support on a housing component, **characterized in that** the support bodies (13) act on a sealing element (14) on the side facing away from their contact side (13a) towards the supporting housing component, which sealing element is disposed on the filter medium body (9), wherein the support bodies (13) are disposed on a support bar (12), wherein a support frame (10) is attached to the filter medium body (9), which support frame is the support of a seal (11), wherein the support bar (12) extends adjacent to a sidewall of the filter medium body (9) and is the support of the sealing element (14), and wherein the support bar (12) is connected to the support frame (10), wherein the support bodies (13) are disposed on the inflow or outflow side of the filter medium body (9), wherein a flow path lies between the support bodies, and wherein the sealing element (14) envelops the support bodies (13) on their contact side.

2. Flat filter element according to claim 1, **characterized in that** the support bodies (13) are disposed on the outflow side of the filter medium body (9).

3. Flat filter element according to one of the claims 1 or 2, **characterized in that** the sealing element (14) is disposed adjacently to a sidewall of the filter medium body (9) between inflow and outflow side.

4. Flat filter element according to claim 1, **characterized in that** the support frame (10) extends on one side beyond the contour of the filter medium body (9).

5. Flat filter element according to one of the claims 1 to 4, **characterized in that** a vibration-damping element (16) is disposed on the contact side of the support bodies (13), in particular a vibration-damping element (16) formed by an elastomer, which is formed separately from the sealing element (14) or in one piece with the sealing element (14), which is acted upon by the support body (13).

6. Flat filter element according to one of the claims 1 to 5, **characterized in that** the filter medium body (9) is designed as folded filter with filter folds.

7. Filtering device with a flat filter element (3) according to one of the claims 1 to 6 and with a filter housing (2) for receiving the flat filter element (3).

8. Filtering device according to claim 7, **characterized in that** an inflow opening (4) and an outflow opening (5) are provided in the filter housing (2) which are at least approximately disposed at the same height, however on different sides of the filter housing (2).

9. Filtering device according to claim 7 or 8, **characterized in that** an inflow space (6) and an outflow space (7) are provided in the filter housing (2) between which a housing web (8) is disposed by which the sealing element (14) of the inserted filter element is supported.

## Revendications

1. Élément filtrant plat, notamment destiné à la filtration de gaz, par exemple pour un filtre à air, ayant un corps de milieu filtrant parallélépipédique (9) avec un côté d'entrée et un côté de sortie situés des côtés opposés du corps de milieu filtrant (9) et ayant plusieurs éléments d'appui (13) disposés sur le corps de milieu filtrant (9), s'élevant au-dessus du côté d'entrée et du côté de sortie et servant d'appui sur un composant de boîtier, **caractérisé en ce que** les éléments d'appui (13) alimentent un élément d'étanchéité (14) situé du côté opposé à leur côté de contact (13a) vers le composant de boîtier servant d'appui, cet élément d'étanchéité étant disposé sur le corps de milieu filtrant (9), les éléments d'appui (13) étant disposés sur une barre de support (12), un cadre de support (10) étant fixé au corps de milieu filtrant (9), lequel corps de support est le support d'un joint d'étanchéité (11), la barre de support (12) s'étendant de manière adjacente à une paroi latérale du corps de milieu filtrant (9) et constituant un support de l'élément d'étanchéité (14), et la barre de support (12) étant reliée au cadre de support (10), les éléments d'appui (13) étant disposés du côté d'entrée ou du côté de sortie du corps de milieu filtrant (9), un trajet d'écoulement se trouvant entre les éléments d'appui et l'élément d'étanchéité (14) enrobant les éléments d'appui (13) sur leur côté de contact.

2. Élément filtrant plat selon la revendication 1, **caractérisé en ce que** les éléments d'appui (13) sont disposés du côté de sortie du corps de milieu filtrant (9).

3. Élément filtrant plat selon l'une des revendications 1 ou 2, **caractérisé en ce que** l'élément d'étanchéité (14) est adjacent à une paroi latérale du corps de milieu filtrant (9) entre le côté d'entrée et le côté de sortie.

4. Élément filtrant plat selon la revendication 1, **caractérisé en ce que** le cadre de support (10) dépasse d'un côté du contour du corps de milieu filtrant (9).

5. Élément filtrant plat selon l'une des revendications 1 à 4, **caractérisé en ce qu'**un élément amortisseur d'oscillations (16) est disposé du côté de contact des éléments d'appui (13), notamment un élément amortisseur d'oscillations (16) constitué d'un élastomère qui est exécuté séparément de l'élément d'étanchéité (14) ou en une seule pièce avec l'élément d'étanchéité (14) et qui est alimenté par l'élément d'appui (13).

6. Élément filtrant plat selon l'une des revendications 1 à 5, **caractérisé en ce que** le corps du milieu filtrant (9) est réalisé en tant que filtre à plis avec des plis de filtre.

7. Dispositif de filtration ayant un élément filtrant plat (3) selon l'une des revendications 1 à 6 et ayant un boîtier de filtre (2) destiné à réceptionner l'élément filtrant plat (3).

8. Dispositif de filtration selon la revendication 7, **caractérisé en ce qu'une** ouverture d'afflux (4) et une ouverture d'écoulement (5) sont réalisées dans le boîtier de filtre (2), ces ouvertures étant disposées au moins approximativement à la même hauteur, mais sur différents côtés du boîtier de filtre (2).

9. Dispositif de filtration selon la revendication 7 ou 8, **caractérisé en ce qu'**un espace d'afflux (6) et un espace d'écoulement (7) sont réalisés dans le boîtier de filtre (2), entre ces espaces se situant une nervure de boîtier (8) sur laquelle s'appuie l'élément d'étanchéité (14) de l'élément filtrant inséré.
